# EUROPÄISCHE PATENTSCHRIFT

(11) **EP 0 430 938 B1**
(45) Veröffentlichungstag und Bekanntmachung des Hinweises auf die Patenterteilung: **18.08.1993**
(21) Anmeldenummer: 88903738.8
(22) Anmeldetag: 11.05.1988
(51) Int. Cl.: A21B 1/24

(54) **BACKOFEN**
BAKING OVEN
FOUR DE BOULANGERIE

(30) Priorität: 11.05.1987 AT 1181/87
(43) Veröffentlichungstag der Anmeldung: 12.06.1991
(73) Patentinhaber: König, Elisabeth, A-8045 Graz (AT)
(72) Erfinder: König, Helmut, deceased (AT)
(74) Vertreter: Brauneiss, Leo, Dipl.Ing.
(86) Internationale Anmeldenummer: AT8800028
(87) Internationale Veröffentlichungsnummer: WO8808669

(56) Entgegenhaltungen:
- EP-A- 0 002 784
- AT-B- 376 106
- AT-B- 378 469
- DE-B- 570 427
- DE-C- 549 132
- FR-A- 2 448 295
- FR-A- 2 483 178
- GB-A- 1 038 849
- US-A- 4 124 016

## Beschreibung

Die Erfindung bezieht sich auf einen Backofen, insbesondere für kontinuierlichen Betrieb, mit einem wärmeisolierten, durch Zwischenwände in Backraumteile unterteilten Backraum, in welchem eine erste Fördervorrichtung angeordnet ist, welche das Backgut tragende, in einem Stapel aufeinanderliegende Auflagen, für die eine Einbringeöffnung in den Backraum vorgesehen ist, in einem Backraumteil vertikal nach oben transportiert, wo eine Übergabeeinrichtung zur Übergabe der Auflagen an eine Zweite Fördervorrichtung vorhanden ist, welche die in einem zweiten Stapel aufeinanderliegenden Auflagen in einem anderen Backraumteil wieder nach unten transportiert, wobei jede der Fördervorrichtungen eine von unten auf den jeweiligen Stapel einwirkende, eine schrittweise Auf- und Abbewegung vollführende Hub- bzw. Absenkeinrichtung hat, der Fixierorgane zur Festhaltung des Stapels während eines Teiles dieser Bewegung zugeordnet sind, und wobei eine Heizung und ein Gebläse zur Beschickung der Backraumteile mit Heißluft vorhanden sind.

Backöfen, bei welchen das auf Auflagen liegende Backgut im Backraum mittels aufeinandergestapelter Auflagen auf und abtransportiert wird, sind aus der AT-PS 376 106 bekannt. Die dort beschriebene Ausbildung hat die Vorteile einer kontinuierlichen Arbeitsweise und einer vergleichsweise geringen Grundrißfläche bei hoher Kapazität des Backraumes, jedoch den Nachteil, daß bei jedem Ein- bzw. Ausbringen einer Auflage in den bzw. aus dem Backraum heiße Backraumatmosphäre aus dem Backraum in die Backstube austritt, welcher Nachteil durch bei der bekannten Konstruktion in der Einbringeöffnung und in der Ausbringeöffnung angeordnete Abdichtklappen nur unwesentlich gemildert werden kann.

Ein Backofen der eingangs geschilderten Art ist aus der DE-PS 549 132 bekannt. Bei dieser Ausführungsform begrenzen Wände, welche am von der Einbringeöffnung aufwärtsbewegten Stapel seitlich anliegen, einen eigentlichen Backraum. In diesen Wänden vorgesehene, durch Schieber verschließbare Öffnungen ermöglichen es, die Backraumatmosphäre auch in den unterhalb bzw. oberhalb dieser Wände liegenden Stapelabschnitten wirksam werden zu lassen. Damit können jedoch die zuvor erwähnten Nachteile nur dann vermieden werden, wenn die Schieber die erwähnten Öffnungen völlig abschließen, wodurch mehr als die Hälfte der Stapelhöhe für die Backraumatsmosphäre unzugänglich bleibt, so daß dort nur eine Gärung, nicht jedoch ein Backprozeß stattfinden kann. Werden jedoch die Schieber zurückgezogen, so daß die erwähnten Öffnungen freigelegt werden, dann wird der gesamte Stapelbereich von der Backraumatmosphäre beaufschlagt und diese Atmosphäre kann auch durch die Einbringeöffnung ungehindert in die Backstube austreten.

Die Erfindung setzt sich zur Aufgabe, diese Nachteile zu vermeiden und einen Backofen der eingangs geschilderten Art so zu verbessern, daß der Austritt von Backraumatmosphäre in die Backstube auf ein Mininum reduziert, oft sogar völlig vermieden ist und daß darüber hinaus eine vielseitigere Betriebsweise des Backofens, stets bei gleichmäßiger Beaufschlagung aller Teigstücke möglich ist. Die Erfindung löst diese Aufgabe dadurch, daß für jeden der Stapel an dieser in seinem unteren Bereich anliegende Abdichtungen vorgesehen sind,die an den dem jeweiligen Stapel benachbarten Wänden angebracht sind und den Stapel gegen diese Wände abdichten, daß an jenem Stapel, an welchem sich die in den Backraum eingebrachten Auflagen zuerst nach oben bewegen, über den im unteren Bereich anliegenden Abdichtungen dieses Stapels weitere Abdichtungen anliegen, wobei beide Abdichtungen dieses Stapels einen Raum begrenzen, in den eine an einen Schwadenverdampfer angeschlossene Dampfzuleitung mündet, und daß oberhalb aller Abdichtungen des jeweiligen Stapels beiderseits desselben vertikale Luftzufuhrkanäle verlaufen, in deren Wänden Luftdurchtrittsöffnungen zur Einblasung von vom Gebläse geförderter Warmluft zwischen die aufeinanderliegenden Auflagen vorhanden sind, wobei die zur einen Seite des jeweiligen Stapels liegenden Luftdurchtrittsöffnungen in Höhenrichtung um die Höhe einer Auflage relativ zu den Luftdurchtrittsöffnungen der anderen Seite versetzt sind, sodaß die Warmluft den Stapel in alternierender Richtung durchströmt. Da bei der erfindungsgemäßen Konstruktion die Abdichtungen, welche am ersten hochgehenden Stapel vorgesehen sind, im unteren Bereich dieses Stapels anliegen, kann somit nur jener Teil der innerhalb des Backofens befindlichen Atmosphäre bei der Ein- bzw. Ausbringung der Auflagen aus dem Backofen austreten, welcher sich unterhalb dieser Abdichtungen befindet. Dieser Teil bildet jedoch nur einen sehr geringen Bruchteil des gesamten Innenvolumens des Backofens bzw. des Backraumes, so daß die Störung der Backstubenatmosphäre nur gering bleibt und praktisch völlig vermieden wird, wenn diese Abdichtungen schon an der untersten Auflage des betreffenden Stapels anliegen, zweckmäßig seitlich, obwohl bei der untersten Auflage auch eine Anlage von unten möglich wäre. Die erwähnten untersten Abdichtungen bilden mit den darüber liegenden Abdichtungen desselben Stapels einen gegenüber dem restlichen Backraum abgedichteten Dampfraum, in welchen in vorteilhafter Weise die sogenannte Ofengare im Backofen in einer Dampfatmosphäre stattfinden kann, wenn dies gewünscht ist. Erst nach Passieren dieses abgedichteten Raumes gelangen dann die Auflagen samt den von ihnen getragenen Teigstücken in den über diesem Dampfraum liegenden eigentlichen Backraum, in welchem die Teigstücke mit Heißluft beaufschlagt und dadurch ausgebacken werden. Zugleich verhindern diese über den untersten Abdichtungen liegenden weiteren Abdichtungen, daß der vom Gebläse geförderte Heißluftstrom in wesentlichem Ausmaß in diesen abgeschlossenen Dampfraum eintreten kann. Die alternierende Durchströmung des Stapels mit der vom Gebläse geförderten Warmluft begünstigt aber im Backraum eine gleichmäßige Ausbackung aller Teigstücke.

Durch Höhenverstellung der den abgedichteten Raum begrenzenden Abdichtungen, insbesondere der oberen Dichtungen, läßt sich die Verweilzeit der Teigstücke in diesem Dampfraum und damit die Ofengarezeit einstellen, ohne die Taktzeit verändern zu müssen.

Der Stapel, bei welchem dieser den Stapel zweckmäßig ringsumgebende Dampfraum vorgesehen ist, muß nicht der Einbringeöffnung unmittelbar benachbart sein, so daß die Auflagen von der Einbringeöffnung gleich in diesen Stapel gelangen, wenngleich dies häufig aus räumlichen Gründen vorzuziehen ist. Vielmehr kann dieser Stapel auch weiter innen im Backofen liegen, wobei dann die Auflagen von der Einbringeöffnung durch eine Transportvorrichtung diesem Stapel zugeführt werden. Es ist auch möglich, am Backofen zwei oder gegebenenfalls auch mehr Einbringeöffnungen anzuordnen, durch welche dieser Stapel gleichzeitig oder wahlweise beschickbar ist, wobei diese Einbringeöffnungen auch an verschiedenen Seiten des Backofens,z.B. an der Vorder- und Rückwand, angeordnet sein können.

Aus der FR-A 2 448 295 ist es bekannt, übereinander liegende Abdichtungen an einem in vertikaler Richtung bewegten Stapel von Auflagen vorzusehen. Die Bewegungsrichtung dieses Stapels ist jedoch von oben nach unten und es liegt eine Zone, in welcher mittels eines Gebläses Heißluft bzw. Dampf zwecks Durchführung eines Gärprozesses eingeleitet werden können, über einer Zone, in welcher die Teigstücke angebacken werden. Das Fertigbacken der Teigstücke erfolgt in einem gesonderten Ofen. Dies hat zunächst den Nachteil, daß zwei gesonderte Backöfen erforderlich sind, aber auch den Nachteil, daß der in die oben liegende Gärzonge eingeleitete Dampf infolge seiner natürlichen Auftriebstendenz nach oben steigt, was Abdichtprobleme bei der Zufuhr neuer Backplatten bringt. Außerdem ist es mit dieser bekannten Konstruktion nicht möglich, die Teigstücke nach dem Einbringen in den Backofen einer Ofengare in ruhender Atmosphäre zu unterwerfen, da das Gebläse auch für die Einleitung des Dampfes in die erwähnte Zone wirksam bleibt.

Gemäß einer Weiterbildung der Erfindung sind die Luftdurchtrittsöffnungen im Querschnitt verstellbar und vorzugsweise von horizontalen Schlitzen gebildet. Die Verstellbarkeit ermöglicht es, die Warmluftzufuhr an das jeweils gewünschte Ausmaß anzupassen.

Zweckmäßig sind die Luftzufuhrkanäle an zur Druckseite eines Gebläses führende Luftkanäle angeschlossen, in denen Verteilorgane, insbesondere Klappen, zur Einstellung der den einzelnen Luftzufuhrkanälen zugeführten Luftmengen vorgesehen sind. Nach einmal erfolgter Einstellung bleiben diese Einstellorgane jedoch unverändert, sie spielen daher lediglich die Rolle eines Justierorganes und es erfolgt in der Regel keine periodische Umsteuerung der Luftzufuhr. Um im Backraum verschiedene Temperaturzonen realisieren zu können, können im Rahmen der Erfindung in den Luftzufuhrkanälen elektrische Zusatzheizkörper vor einzelnen Luftaustrittsöffnungen vorgesehen sein, die fallweise zugeschaltet werden.

Die die Vertikalbewegung der Auflagen im jeweiligen Stapel bewirkenden Fördervorrichtungen können zumindest je zwei Hubstempel haben, die an der Bodenfläche der jeweils untersten Auflage angreifen und vorzugsweise über Exzente angetrieben sind. Die Fixierorgane sind zweckmäßig von Sperrklinken gebildet, welche in die Bewegungsbahn der Auflagen einbringbar bzw. daraus zurückziehbar sind. Der Antrieb der Hub- bzw. Absenkeinrichtung ist mit dem Antrieb für die Fixierorgane zweckmäßig synchronisiert, um eine rasche und störungsfreie Funktion sicherzustellen.

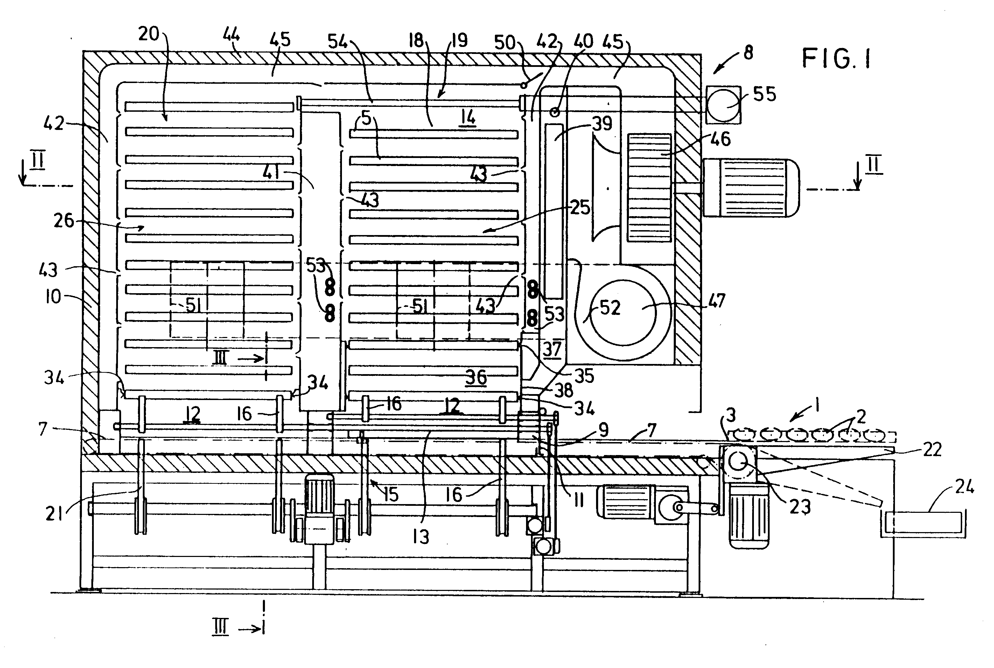

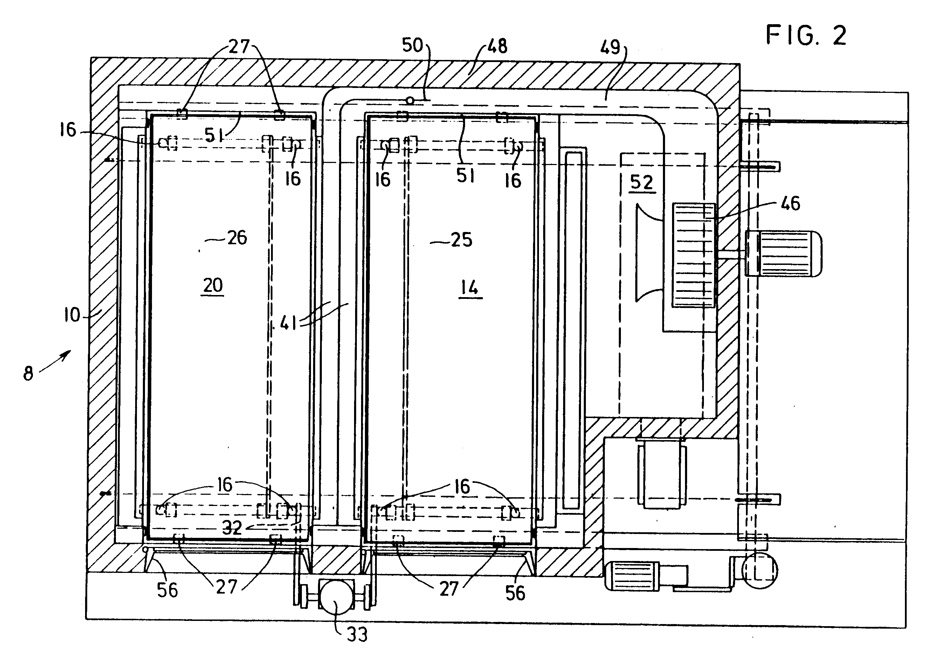

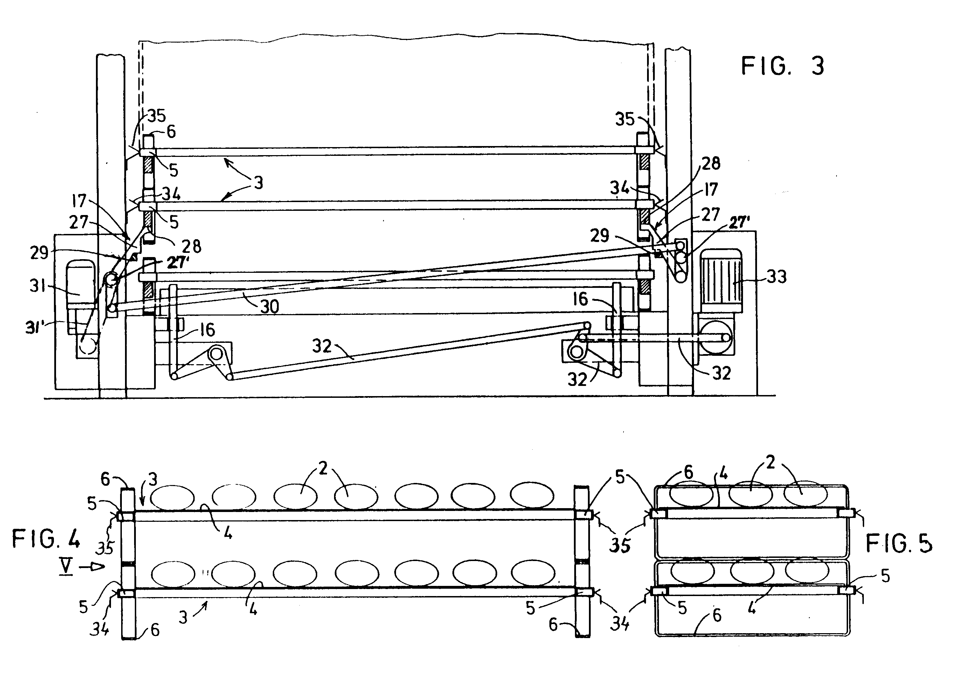

Weitere Kennzeichen und Vorteile der vorliegenden Erfindung ergeben sich aus der Beschreibung eines Ausführungsbeispieles der Erfindung, welches in der Zeichnung schematisch dargestellt ist. Fig.1 zeigt einen Vertikalschnitt durch den Backofen. Fig.2 ist ein Schnitt nach der Linie II-II der Fig.1. Fig.3 ist ein Schnitt nach der Linie III-III der Fig.1. Fig.4 zeigt in Seitenansicht die Ausbildung und Abdichtung der die Teigstücke tragenden Auflagen und Fig.5 ist eine Ansicht in Richtung des Pfeiles V der Fig.4.

An einer Beladestation 1, welche zugleich auch die Entladestation ist, werden die auszubackenden Teigstücke 2 auf Auflagen 3 (Fig.4,5) aufgelegt, die unmittelbar übereinander aufstapelbar sind und auch relativ zueinander in horizontaler Richtung verschiebbar sind. Jede dieser Auflagen 3 hat eine die Teigstücke 2 tragende Backplatte 4 (Fig.4,5), welche auch von einem gesonderten Backblech gebildet sein kann. Diese Backplatte 4 wird von einem umlaufenden viereckigen Rahmen 5 getragen, der an zwei einander gegenüberliegenden Seiten bügelartige Abstützungen 6 aufweist, mit welchen die einzelnen Auflagen 3 unmittelbar aufeinandergestapelt werden können. Die Höhe der einzelnen Auflagen 3 (Summe der Höhen der oberen und unteren Abstützung 6) ist so bemessen, daß die Höhe üblicher Teigstücke 2 problemlos aufgenommen werden kann, ohne daß die Teigstücke der jeweils unteren Auflage an der oberen Auflage anstoßen.

Mittels eines endlosen Kettenförderers 7 (Fig.1), der eine horizontalliegende Transporteinrichtung bildet, werden die mit den Teigstücken 2 beladenen Auflagen 3 von der Beladestation in den Backofen 8 durch eine Einbringeöffnung 9 des wärmeisolierten Gehäuses 10 des Backofens eingebracht. Diese Einbringeöffnung 9 kann eine Verschlußtüre 11 oder eine Klappe haben, zwecks Vermeidung von Wärmeaustritt aus dem Backofen 8. Der Kettenförderer 7 führt die jeweilige Auflage 3 zu einer Fördervorrichtung 12, von welcher die jeweilige Auflage 3 an der Stelle 13 ergriffen und vertikal nach oben in den vom Gehäuse 10 umschlossenen Backraum 14 gefördert wird. Hiezu ist diese Fördervorrichtung 12 mit einer Hubeinrichtung 15 versehen, welche mehrere Hubstempel 16 hat, die periodisch auf- und abgehen und bei der Aufwärtsbewegung die jeweilige Auflage 3 in den Backraum 14 drücken. Beim Zurückgehen der Hubstempel 16 wird das Nachrutschen der Auflage 3 durch Fixierorgane 17 (Fig.3) verhindert, die später noch näher beschrieben werden. Nach Zurückgehen der Hubstempel 16 kann die nächste Auflage 3 in die Position 13 gebracht und durch die Hubstempel 16 nach oben gehoben werden, wobei diese Auflage 3 von unten unmittelbar an die darüberliegende Auflage 3 zur Anlage kommt. Auf diese Weise wird im Backraum 14 ein Stapel unmittelbar aufeinanderliegender Auflagen 3 gebildet, welcher Vorgang solange wiederholt wird, bis die oberste Auflage 3 des so gebildeten Stapels in die Position 18 (Fig.1) gelangt ist, wo sie von einer Übergabeeinrichtung 19 vom Backraumteil 14 in einen danebenliegenden weiteren Backraumteil 20 horizontal verschoben werden. Zur Erleichterung dieser Verschiebebewegung können in den Backraumteilen 14,20 im Bereich der Einwirkung der Übergabeeinrichtung 19 Führungsschienen für die vom Backraumteil 14 in den Backraumteil 20 zu übergebende Auflage 3 vorhanden sein. Im Backraumteil 20 ist eine weitere Hubeinrichtung 21 wirksam, welche die im Backraumteil 20 in analoger Weise aufeinander gestapelten Auflagen 3 schrittweise nach unten bewegt. Zwischen den einzelnen Schritten dieser Hubeinrichtung 21 sind die Auflagen 3 wieder durch Fixierorgane 17 in ihrer Höhenlage gesichert. Die jeweils unterste Auflage 3 im Backraumteil 20 gelangt aus diesem Backraumteil 20 wieder auf den Kettenförderer 7 und wird von diesem aus dem Backofen 8 durch die Einbringeöffnung 9 heraus zur Beladestation 1 geführt. Dort befindet sich eine Abkippvorrichtung 22 in Form einer um eine horizontale Achse 23 kippbaren Konsole, bei deren Abkippung das auf der jeweiligen Auflage 3 antransportierte, fertig ausgebackene Backgut auf ein querlaufendes Förderband 24 rutscht. Die dabei festgehaltene Auflage 3 wird nach Zurückkippen der Abkippvorrichtung 22 wieder bereit für die erneute Aufnahme von Teigstücken 2, die an der Beladestation 1 händisch oder auch automatisch, etwa mittels eines Abziehbandes, aufgebracht werden können. Nach erneuter Belegung dieser Auflage 3 mit Teigstücken 2 wird die belegte Auflage 3 mittels des Kettenförderers 7 wieder in die Position 13 gebracht und von der Hubeinrichtung 15 der Fördervorrichtung 12 wieder als unterste Platte unter den Backplattenstapel 25 im Backraumteil 14 gehoben. Der Kettenförderer 7 vollführt also eine taktweise Hin- und Herbewegung, auf welche die Auf- und Abbewegung der Hubstapel 16 und die Bewegung der Fixierorgane 17 abgestimmt sind.

Damit die beiden, in den Backraumteilen 14,20 übereinanderliegenden Auflagen 3 der beiden Stapel 25,26 jeweils einen freien Raum unter dem jeweiligen Stapel 25,26 zum Einbringen bzw. Abführen der jeweils untersten Auflage 3 bzw. für die Funktion des Kettenförderers 7 freihalten, haben die Fixierorgane 17 (Fig.3) Sperrklinken 27, die sich nach dem Abheben bzw. vor dem Absenken unterhalb der untersten Auflage 3 unter eine Auflagefläche 28 der Auflage 3 bewegen und somit den ganzen Stapel 25 bzw. 26 der Auflagen 3 tragen. Zur Abstützung der Sperrklinken 27 (Fig.3) in ihrer Sperrlage und zur genauen Lagefixierung dienen Anschläge 29. Die Verschwenkung dieser Sperrklinken 27 um ortsfeste Schwenkachsen 27' in die Bewegungsbahn der Auflagen 3 bzw. in die Sperrlage bzw. die folgende Zurückziehung der Sperrklinken 27 erfolgt mittels Exzentertrieben 30 von einem Getriebemotor 31 und einer Kette 31' aus. Die Hubstempel 16 werden gleichfalls über einen Exzentertrieb 32 von einem Getriebemotor 33 aus bewegt. Die beiden Getriebemotoren 31,33 sind über eine Synchronsteuerung elektrisch miteinander synchronisiert, so daß die Bewegung der Hubstempel 16 auf die Bewegung der Sperrklinken 27 der beiden Hubeinrichtungen 15, 21 abgestimmt ist bzw. umgekehrt. Die beiden Hubeinrichtungen 15,21 arbeiten hiebei synchron, jedoch relativ zueinander zeitverschoben, und dementsprechend auch die den beiden Stapeln zugeordneten Sperrklinken 27.

Um zu vermeiden, daß die die Teigstücke 2 in den Backraumteilen 14,20 ausbackende Warmluft bei der Ein- bzw. Ausbringung der Auflagen 3 aus der Einbringeöffnung 9 in die Backstube austritt, sind Abdichtungen 34 vorgesehen, welche den jeweiligen Stapel 15 bzw.26 der Auflagen 3 gegen die ihm benachbarten Wände der Backraumteile 14 bzw.20 im unteren Bereich jedes der beiden Stapel 25 bzw.26 abdichten. Diese Abdichtungen 34 liegen rundum an den Rahmen 5 der Auflagen 3 an (Fig.4,5) und sind z.B. von federnd ausgebildeten Metallzungen gebildet oder von Gummistreifen. Weitere Abdichtungen 35 können bei jenem Stapel 25 vorgesehen sein, dessen Auflagen 3 eine Aufwärtsbewegung vollführen. Diese Abdichtungen 35 sind oberhalb der Abdichtungen 34 angeordnet, so daß zwischen den beiden Abdichtungen 34,35 ein dicht abgeschlossener Raum 36 gebildet wird, in welchen eine Dampfzuleitung 37 über eine Öffnung 38 mündet. Diese Dampfzuleitung 37 führt Wasserdampf, der mittels eines Schwadenverdampfers 39 erzeugt wird, über welchen eine Sprühdüse 40 Wasser sprüht. Der Raum 36 bewirkt, daß das über die Einbringeöffnung 9 eingebrachte Backgut zunächst nur mit Wasserdampf bzw. Schwaden im Raum 36 beaufschlagt wird, so daß das Teigstück die genannte Ofengare im Backraum 8 vollziehen kann. Erst nach dem Weitertransport verlassen die Teigstücke 2 den Raum 36 nach Passieren der oberen Abdichtung 35 und gelangen in den Backraumteil 14, wo die auf den Auflagen 3 liegenden Teigstücke 2 erstmals mittels eines Heißluftstromes erwärmt werden, da ja die oberen Abdichtungen 35 den Raum 36 gegen die Heißluftzufuhr abdichten. Für diese Heißluftzufuhr dienen seitlich der beiden Stapel 25,26 angeordnete Luftzufuhrkanäle 41,42, von denen die Luftzufuhrkanäle 41 mittig, also zwischen den beiden Stapeln 25,26, angeordnet sind, wogegen die Luftzufuhrkanäle 42 außen liegen. Die Luftzufuhrkanäle 41,42 haben dem jeweiligen Stapel 25 bzw.26 zugeordnete Luftdurchtrittsöffnungen 43 in Schlitzform, welche Öffnungen 43 an den beiden Seiten jedes Stapels 25 bzw.26 relativ zueinander in Höhenrichtung jeweils um die Höhe einer Auflage 3 versetzt sind. Zweckmäßig ist der Querschnitt jeder Luftdurchtrittsöffnung 43 verstellbar. Die beschriebene wechselseitige Anordnung der Luftdurchtrittsöffnungen 43 hat zur Folge, daß zwischen je zwei einander benachbarten Auflagen 3 die Luft immer in wechselnder Richtung zwischen die beiden Auflagen 3 eingeblasen wird, so daß eine gleichmäßige Beaufschlagung aller Teigstücke 2 mit Warmluft erfolgt. Die Einstellung der Querschnittsgröße der Luftdurchtrittsöffnungen 43 ermöglicht es, die Luftzufuhr an das jeweils zu behandelnde Backgut anzupassen. Beispielsweise wird bei der Herstellung von Weißgebäck in der Regel in der ersten Backphase die Wärme sanft zugeführt (weniger Luft), damit das Teigstück sich möglichst ohne Hautbildung entwickeln kann. In der späteren Backphase wird dann mehr Wärmeenergie zugeführt, also eine größere Schlitzöffnung verwendet. Bei Schwarzbrot hingegen wird in der Regel von Anfang an die Beaufschlagung des Backgutes mit Warmluft mit voller Intensität durchgeführt.

Die Beschickung der äußeren Luftzufuhrkanäle 42 mit Warmluft erfolgt über einen entlang der Deckwand 44 des Backofens 8 verlaufenden Luftkanal 45, welcher zur Druckseite eines Gebläses 46 führt, unter welchem eine Heizung 47 liegt. Die Beschickung der inneren Luftkanäle 41 mit Warmluft erfolgt über einen entlang der einen Seitenwand 48 (Fig.2) des Backofens 8 verlaufenden Luftkanal 49, der ebenfalls zur Druckseite des Gebläses 46 führt. In den beiden Luftkanälen 45,49 liegen von schwenkbaren Klappen 50 gebildete Verteilorgane zur Grobeinstellung der Verteilung der den beiden Luftkanälen 45,49 zugeführten Luftmengen. Die Feineinstellung der aus den Luftdurchtrittsöffnungen 43 austretenden Luftmengen erfolgt mittels der erwähnten Querschnittsveränderung dieser Öffnungen.

Die Absaugung der Luft aus den beiden Backraumteilen 14,20 erfolgt durch je eine Absaugöffnung 51, die in der Seitenwand des Backraumteiles 14 bzw. 20 angeordnet ist und zu einem gemeinsamen Luftabzugskan 52 führen, der entlang der Backofenseitenwand zur Heizung 47 bzw. zur Saugseite des Gebläses 46 führt.

Bei der Herstellung von Brot ist es in der Regel erwünscht, in der Anfangsphase des Backprozesses eine erhöhte Temperatur auf das Backgut einwirken zu lassen, die in der späteren Phase des Backprozesses nicht mehr notwendig ist und in der Regel wesentlich abgesenkt wird, damit ein gründliches Ausbacken erfolgen kann. Um im Backofen verschiedene Temperaturzonen realisieren zu können, sind vor einzelnen Luftdurchtrittsöffnungen 43 elektrische Zusatzheizkörper 53 angeordnet, die nach Bedarf zugeschaltet werden.

Auf der dem Luftabzugskanal 52 und dem Luftkanal 49 gegenüberliegenden Seite der Backraumteile 14,20 sind Türen 56 vorgesehen (Fig.2), durch welche die beiden Backraumteile 14,20 bzw. die darin befindlichen Stapel 25,26 der Auflagen 3 zugänglich sind.

Die Übergabeeinrichtung 19 hat einen Stempel 54, welcher durch einen Antrieb 55, z.B. eine Spindel oder einen Druckmittelzylinder, betätigt wird. Seine Bewegung erfolgt ebenso wie die Bewegung des Kettenförderers 7 während des Stillstandes der beiden Hubeinrichtungen 15,21.

Die Abdichtungen 34 spielen zusammen mit der Verschlußtüre 11 die Rolle einer Schleuse, so daß nur sehr wenig Warmluft und so gut wie kein Dampf in die Backstube austreten kann.

Wie leicht ersichtlich, ist die erfindungsgemäße Konstruktion auf solche Anordnungen ohne Schwierigkeiten erweiterbar, bei welchen mehr als zwei Fördervorrichtungen 12 nebeneinander angeordnet sind. Zweckmäßig ist die Zahl der Fördervorrichtungen jedoch eine gerade Zahl, um wieder zurück zum unten angeordneten Kettenförderer 7 zu kommen, so daß ein und dieselbe Öffnung 9 als Einbringeöffnung und Ausbringeöffnung für die Auflagen 3 dient, obwohl - wie bereits erwähnt - auch Backöfen mit mehr als einer Einbringeöffnung bzw. Ausbringeöffnung denkbar und vorteilhaft sind, z.B. dann, wenn auf einen Durchlauf des Backofens Wert gelegt wird, so daß also die Ausgabe der fertiggebackenen Backware an einer anderen Stelle erfolgt als die Eingabe der auszubackenden Teigstücke, zweckmäßig an jener der Eingabestelle abgewendeten Wand des Backofens.

## Patentansprüche

1. Backofen, insbesondere für kontinuierlichen Betrieb, mit einem wärmeisolierten, durch Zwischenwände in Backraumteile (14,20) unterteilten Backraum, in welchem eine erste Fördervorrichtung (12) angeordnet ist, welche das Backgut tragende, in einem Stapel (25) aufeinanderliegende Auflagen (3), für die eine Einbringeöffnung (9) in den Backraum vorgesehen ist, in einem Backraumteil (14) vertikal nach oben transportiert, wo eine Übergabeeinrichtung (19) zur Übergabe der Auflagen (3) an eine zweite Fördervorrichtung (12) vorhanden ist, welche die in einem zweiten Stapel (26) aufeinanderliegenden Auflagen (3) in einem anderen Backraumteil (20) wieder nach unten transportiert, wobei jede der Fördervorrichtungen (12) eine von unten auf den jeweiligen Stapel (25 bzw. 26) einwirkende, eine schrittweise Auf- und Abbewegung vollführende Hub- bzw. Absenkeinrichtung (15 bzw. 21) hat, der Fixierorgane (17) zur Festhaltung des Stapels (25 bzw. 26) während eines Teiles dieser Bewegung zugeordnet sind, und wobei eine Heizung (47) und ein Gebläse (46) zur Beschickung der Backraumteile (14,20) mit Heißluft vorhanden sind, dadurch gekennzeichnet, daß für jeden der Stapel (25 bzw. 26) an diesem in seinem unteren Bereich anliegende Abdichtungen (34) vorgesehen sind, die an den dem jeweiligen Stapel (25 bzw. 26) benachbarten Wänden angebracht sind und den Stapel (25 bzw. 26) gegen diese Wände abdichten, daß an jenem Stapel (25), an welchem sich die in den Backraum eingebrachten Auflagen (3) zuerst nach oben bewegen, über den in unteren Bereich anliegenden Abdichtungen (34) dieses Stapels (25) weitere Abdichtungen (35) anliegen, wobei beide Abdichtungen (34,35) dieses Stapels (25) einen Raum (36) begrenzen, in den eine an einen Schwadenverdampfer (39) angeschlossene Dampfzuleitung (37) mündet, und daß oberhalb aller Abdichtungen (34,35) des jeweiligen Stapels (25 bzw. 26) beiderseits desselben vertikale Luftzufuhrkanäle (41,42) verlaufen, in deren Wänden Luftdurchtrittsöffnungen (43) zur Einblasung von vom Gebläse (46) geförderter Warmluft zwischen die aufeinanderliegenden Auflagen (3) vorhanden sind, wobei die zur einen Seite des jeweiligen Stapels (25 bzw. 26) liegenden Luftdurchtrittsöffnungen (43) in Höhenrichtung um die Höhe einer Auflage relativ zu den Luftdurchtrittsöffnungen der anderen Seite versetzt sind, so daß die Warmluft den Stapel (25 bzw. 26) in alternierender Richtung durchströmt.

2. Backofen nach Anspruch 1, dadurch gekennzeichnet, daß die den abgedichteten Raum (36) begrenzenden Abdichtungen (34,35) höhenverstellbar sind.

3. Backofen nach Anspruch 1 oder 2, dadurch gekennzeichnet, daß die Luftdurchtrittsöffnungen (43) im Querschnitt verstellbar und vorzugsweise von horizontalen Schlitzen gebildet sind.

4. Backofen nach einem der Ansprüche 1 bis 3, dadurch gekennzeichnet, daß die Luftzufuhrkanäle (41,42) an zur Druckseite eines Gebläses (46) führende Luftkanäle (45,45) angeschlossen sind, in denen Verteilorgane, insbesondere Klappen (50), zur Einstellung der den einzelnen Luftzufuhrkanälen (41,42) zugeführten Luftmengen vorgesehen sind.

5. Backofen nach einem der Ansprüche 1 bis 4, dadurch gekennzeichnet, daß in den Luftzufuhrkanälen (41,42) elektrische Zusatzheizkörper (53) vorgesehen sind.

6. Backofen nach einem der Ansprüche 1 bis 5, dadurch gekennzeichnet, daß unterhalb der beiden, den Stapeln (25 bzw. 26) zugeordneten Fördervorrichtungen (12) eine horizontale Transporteinrichtung, insbesondere ein Kettenförderer (7), vorgesehen ist, welcher die Einbringeöffnung (9) durchsetzt und zu einer Belade- und Entladestation (1) vor der Einbringeöffnung (9) führt.

7. Backofen nach einem der Ansprüche 1 bis 6, dadurch gekennzeichnet, daß zumindest ein Luftabzugskanal (52) seitlich an die von den Auflagenstapeln (25 bzw. 26) durchlaufenen Backraumteile (14 bzw. 20) angeschlossen ist und zu einer Heizung (47) und zur Saugseite eines Gebläses (46) führt.

8. Backofen nach einem der Ansprüche 1 bis 7, dadurch gekennzeichnet, daß mehr als zwei Stapel (25,26) und dementsprechend mehr als zwei Fördervorrichtungen (12) vorgesehen sind, vorzugsweise in gerader Anzahl.

9. Backofen nach einem der Ansprüche 1 bis 8, dadurch gekennzeichnet, daß für die Auflagen (3) mehr als eine Einbringe- bzw. Ausbringeöffnung (9) des Backraumes vorhanden ist.

## Claims

1. A baking oven, in particular for continuous operation, with a heat-insulated baking space which is sub-divided into baking-space sections (14, 20) by partitions and in which there is arranged a first conveying device (12), which transports layers (3) - which carry the material for baking and lie one on top of the other in a stack (25), and for which a charging opening (9) is provided in the baking space - vertically upwards in a baking-space section (14), at the top of which there is a transfer device (19) for transferring the layers (3) to a second conveying device (12), which transports the layers (3) - which lie one on top of the other in a second stack (26) - back downwards in another baking-space section (20), each of the conveying devices (12) having a lifting or lowering device (15 or 21), which acts on the respective stack (25 or 26) from below and performs a progressive upward and downward movement, and which is assigned fixing elements (17) for securing the stack (25 or 26) during a part of this movement, and a heater (47) and a fan (46) being present in order to feed the baking-space sections (14, 20) with hot air, characterised in that seals (34) are provided for each stack (25, 26), which rest against the stacks (25, 26) in the lower region thereof, are mounted on the walls adjacent to the respective stack (25 or 26) and seal the stack (25 or 26) against these walls, in that additional seals (35) rest against the stack (25) - where the layers (3) charged into the baking space first move upwards - above the seals (34) resting against this stack (25) in the lower region, the two seals (34, 35) of this stack (25) delimiting a space (36), in which there discharges a steam supply pipe (37) attached to a vapour evaporator (39), and in that vertical air supply channels (41, 42) extend above all the seals (34, 35) of the respective stack (25 or 26) on both sides thereof, air passages (43) being present in the walls of the air supply channels (41, 42) for blowing warm air conveyed by the fan (46) between the layers (3) lying one on top of the other, and the air passages (43) on one side of the respective stack (25 or 26) being offset vertically relative to the air passages on the other side by the height of one layer, so that the warm air flows through the stack (25 or 26) in an alternating direction.

2. A baking oven according to Claim 1, characterised in that the seals (34, 35) delimiting the sealed space (36) are vertically adjustable.

3. A baking oven according to Claim 1 or 2, characterised in that the air passages (43) have an adjustable cross-section and are preferably formed by horizontal slits.

4. A baking oven according to any one of Claims 1 to 3, characterised in that the air supply channels (41, 42) are attached to air channels (45, 49), which lead to the pressure side of a fan (46) and in which distributor elements - in particular flaps (50) - are provided for adjusting the quantities of air supplied to the individual air supply channels (41, 42).

5. A baking oven according to any one of Claims 1 to 4, characterised in that auxiliary electrical heating bodies (53) are provided in the air supply channels (41, 42).

6. A baking oven according to any one of Claims 1 to 5, characterised in that a horizontal transporting device - in particular a chain conveyor (7) - is provided beneath the two conveying devices (12) assigned to the stacks (25, 26), this transporting device passing through the charging opening (9) and leading to a loading and unloading station (1) in front of the charging opening (9).

7. A baking oven according to any one of Claims 1 to 6, characterised in that at least one air exhaust channel (52) is attached laterally to the baking-space sections (14, 20), through which the stacks (25, 26) of layers pass, and leads to a heater (47) and to the suction side of a fan (46).

8. A baking oven according to any one of Claims 1 to 7, characterised in that more than two stacks (25, 26) and consequently more than two conveying devices (12) are provided, preferably in an even number.

9. A baking oven according to any one of Claims 1 to 8, characterised in that the baking space has more than one charging and/or discharging opening (9) for the layers (3).

## Revendications

1. Four de cuisson pour le fonctionnement en continu en particulier avec une chambre de cuisson subdivisée par des parois intermédiaires en divisions (14, 20) de chambre de cuisson, dans lequel est disposé un premier dispositif de transport (12) qui transporte des supports (3) portant les produits à cuire et qui sont posés les uns au-dessus des autres en une pile (25), une ouverture (9) étant prévue pour leur introduction dans la chambre de cuisson, verticalement vers le haut dans une division (14) de chambre de cuisson où un dispositif de transfert (19) est installé pour transférer les supports (3) vers un deuxième dispositif de transport (12) qui transporte les supports (3) posés les uns au-dessus des autres en une deuxième pile (26) vers le bas dans une autre division (20) de chambre de cuisson, où chacun des dispositifs de transport (12) possède un dispositif de montée ou de descente (15 respectivement 21) qui agit par le bas sur la pile respective (25 ou 26) et qui effectue un mouvement de montée et de descente progressif et auquel sont associés des organes de maintien (17) destinés à retenir la pile (25 ou 26) pendant une partie de ce mouvement, et où un chauffage (47) et une soufflante (46) sont installés pour alimenter en air chaud les divisions (14, 20) de chambre de cuisson, caractérisé en ce que pour chacune des piles (25 ou 26) sont prévus des éléments d'étanchéité (34) qui viennent plaquer contre la pile dans sa partie inférieure et qui sont disposés sur les parois voisines de la pile respective (25 ou 26) et qui assurent l'étanchéité de la pile (25 ou 26) par rapport à ces parois, que sur la pile (25) sur laquelle les supports (3) introduits dans la chambre de cuisson se déplacent dans un premier temps vers le haut viennent plaquer d'autres éléments d'étanchéité (35) au-dessus des éléments d'étanchéité (34) de cette pile (25) qui viennent plaquer dans la partie inférieure, les deux éléments d'étanchéité (34, 35) de cette pile (25) délimitant un espace (36) dans lequel débouche une conduite d'amenée de vapeur (37) raccordée à un évaporateur à buée (39), et que, au-dessus de l'ensemble des éléments d'étanchéité (34, 35) de la pile concernée (25 ou 26) cheminent de part et d'autre de cette dernière des gaines verticales d'alimentation d'air (41, 42) qui présentent dans leurs parois des ouvertures (43) de passage de l'air destinées à l'injection d'air chaud délivré par la soufflante (46), entre les supports (3) posés les uns au-dessus des autres, les ouvertures (43) de passage de l'air situées d'un côté de la pile concernée (25 ou 26) étant décalées dans le sens de la hauteur par rapport aux ouvertures de passage de l'air situées de l'autre côté d'une distance correspondant à la hauteur d'un support de telle façon que l'air chaud traverse la pile (25 ou 26) dans des directions alternées.

2. Four de cuisson suivant la revendication 1, caractérisé en ce que les éléments d'étanchéité (34, 35) délimitant l'espace étanché (36) sont réglables en hauteur.

3. Four de cuisson suivant la revendication 1 ou 2, caractérisé en ce que les ouvertures (43) de passage de l'air sont de section réglable et qu'elles sont constituées de préférence par des fentes horizontales.

4. Four de cuisson suivant une quelconque des revendications 1 à 3, caractérisé en ce que les gaines d'alimentation d'air (41, 42) sont raccordées à des gaines d'air (45, 49) qui mènent vers le côté refoulement d'une soufflante (46) et dans lesquelles sont prévues des organes de distribution, clapets (50) en particulier, destinés au réglage des débits d'air acheminés vers les différents gaines d'alimentation d'air (41, 42).

5. Four de cuisson suivant une quelconque des revendications 1 à 4, caractérisé en ce que des corps chauffants auxiliaires (53) électriques sont prévus dans les gaines d'alimentation d'air (41, 42).

6. Four de cuisson suivant une quelconque des revendications 1 à 5, caractérisé en ce qu'en-dessous des deux dispositifs de transport (12) associés aux piles (25 ou 26) est prévu un équipement de transport horizontal, un transporteur à chaîne (7) en particulier qui traverse l'ouverture d'introduction (9) et mène vers un poste de chargement et déchargement (1) en amont de l'ouverture d'introduction.

7. Four de cuisson suivant une quelconque des revendications 1 à 6, caractérisé en ce qu'au moins un conduit d'évacuation d'air (52) est raccordé latéralement sur les divisions (14 ou 20) de chambre de cuisson traversées par les piles (25 respectivement 25) constituées par les supports, et mène vers le côté aspiration d'une soufflante (46).

8. Four de cuisson suivant une quelconque des revendications 1 à 7, caractérisé en ce qu'un nombre de piles (25, 26) supérieur à deux et en conséquence un nombre de dispositifs de transport (12) supérieur à deux sont prévus, ce nombre étant pair de préférence.

9. Four de cuisson suivant une quelconque des revendications 1 à 8, caractérisé en ce qu'il est prévu pour les supports (3) un nombre supérieur à un d'ouvertures (9) d'introduction ou d'évacuation de la chambre de cuisson.
